# EUROPEAN PATENT APPLICATION

(11) **EP 2 506 046 A1**
(43) Date of publication of application: **03.10.2012**
(21) Application number: 11305372.2
(22) Date of filing: 31.03.2011
(51) Int. Cl.: G02B 6/12, G02B 6/122, G02B 6/293

(54) **An optical multiplexer**

(71) Applicant: Alcatel Lucent, 75007 Paris (FR)
(72) Inventor: Shen, Alexandre, 91767 Palaiseau (FR); Combrie, Sylvain, 75014 Paris (FR); De Rossi, Alfredo, 75014 Paris (FR)
(74) Representative: Shamsaei Far, Hassan

(57) **Abstract**

A multiplexer configured to multiplex N optical channels comprising N resonators each resonator coupled to a bus waveguide. The bus waveguide being common to the N resonators and configured to receive each of said N optical channels from an output of a respective resonator and provide said N received channels at an output.

## Description

The present invention relates to optical components.

### BACKGROUND ART

Photonic Integrated Circuits (PIC) are being increasingly used within the field of optical components. One example of PICs is related to transmitters using dense multiple wavelength division multiplexing technology (DWDM Tx).

### SUMMARY

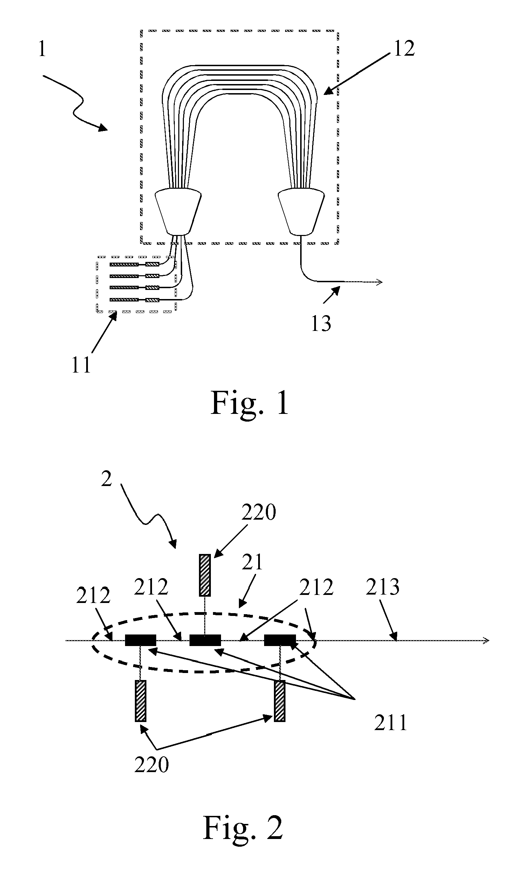

A known PIC transmitter typically comprises two main distinct parts: one part is a WDM (or DWDM in particular) laser bar, possibly continued by optical modulators; the other part is typically mainly a multiplexer. One exemplary representation of such transmitter is shown in figure 1. As shown in this figure, the transmitter 1 comprises an array of laser bars (and optionally optical modulators) 11 coupled to a multiplexer 12, in this case being an arrayed waveguide grating (AWG) the output of which is connected to an output fiber 13. In such known architecture, the multiplexer 12 is typically a relatively large-sized component, having a size of typically about 4.4mm x 6.7mm. Such size is also significant as compared to typical laser or modulator sizes (with typical chip size of about 250µm x 600µm). Furthermore, such large size of some currently known multiplexers implies a relatively low yield on fabrication and low tolerance to fabrication defects, thus resulting in high costs.

In order to reduce the size of such multiplexers some existing solutions relate to the use of different materials for the fabrication of the laser and modulator bars (InP) on the one hand and the multiplexer (SiOx/Si) on the other. However, such solutions typically have a significant drawback as it is typically very difficult to obtain a satisfactory alignment between the lasers and the multiplexer. This problem gives rise to an increase in the overall costs.

Another known solution is to use simple couplers located between the laser and modulator bars and the multiplexer, but couplers typically give rise to high optical losses for channel numbers higher than 6.

Another known solution is based on the use of resonant cavities to couple each output of the laser into a bus waveguide, so that the bus waveguide will collect all the WDM channels. One such solution is known from "Design of Coupled Ring Resonators CWDM Multiplexers", M. Malak et all, 26 NATIONAL RADIO SCIENCE CONFERENCE (NRSC 2009). However, such known solution as described in the above-identified document suffers from certain drawbacks as it would require a relatively high number of resonators which is always higher than the number of channels to be multiplexed. Such architecture is therefore not optimal as regards obtaining a compact device.

Furthermore, the resonators in the above known solution are required to process groups of channels, and therefore, once the processing is done the channels which are not needed (typically half of the input channels) need to be filtered out which is another drawback of the known solution.

A further drawback of this known solution is that it is not optimal as regards the dimensions of the final product due to the use of ring resonators in the disclosed architecture. As will be described further below, the present invention proposes the use of photonic crystal based resonators which allow significant reduction of dimensions of the final manufactured device.

Embodiments of the invention aim at providing a multiplexer configured to multiplex N optical channels, where N is an integer number greater than zero the multiplexer comprising N resonators each resonator being based on a photonic crystal micro-cavity structure and coupled to a bus waveguide, said bus waveguide being common to the N resonators and configured to receive each of said N optical channels from an output of a respective resonator and provide said N received channels at an output.

According to some specific embodiments, a photonic crystal micro-cavity structure is provided on a hexagonal photonic crystal lattice structure. According to some specific embodiments , the photonic crystal structure may comprise a thin layer, of about 150 to about 300 nm, of high-index material. According to some specific embodiments, each resonator is based on a pair of photonic crystal micro-cavity and configured to allow for a specific direction for the propagation of a respective optical channel.

Some embodiments of the present invention feature a photonic integrated circuit comprising the multiplexer as provided herein.

Some embodiments of the present invention feature an optical transmitter comprising the multiplexer as provided herein.

According to some specific embodiments of the present invention the optical transmitter further comprises N laser sources, each laser source being configured to transmit one of said N optical channels at a respective central wavelength.

According to some specific embodiments, each of said N laser sources is coupled to a respective one of said N resonators matched to said central wavelength of the laser source to which the resonator is coupled.

According to some specific embodiments, some laser sources are located on one side of the bus waveguide and other laser sources are located on the opposite side of the bus waveguide on the structure of the optical transmitter.

These and further features and advantages of the present invention are described in more detail, for the purpose of illustration and not limitation, in the following description as well as in the claims with the aid of the accompanying drawings.

### BRIEF DESCRIPTION OF THE DRAWINGS

Figure 1, already described, is an exemplary schematic representation of a known photonic integrated circuit transmitter.
Figure 2 is an exemplary schematic representation of a resonator according to some embodiments.
Figure 3 is an exemplary schematic representation of a photonic integrated circuit transmitter according to some embodiments.

### DETAILED DESCRIPTION

Referring to figure 2, there is shown an exemplary schematic representation of a photonic integrated circuit transmitter 2 according to some embodiments. The transmitter 2 comprises a multiplexer section generally shown in the figure by reference numeral 21. The multiplexer section 21 in turn comprises a number of resonator-based couplers 211 (for simplicity hereinafter referred to resonators). In the figure only three resonators are shown, however it is to be understood that any convenient number N of such resonators may be used.

Each resonator is optically coupled to a respective laser source 220. Each of the laser sources 220 may be a directly modulated laser (DML) for example a Distributed Feedback Bragg laser diode providing mono-wavelength operation, a sophisticated Distributed Bragg Reflector laser diode, which can provide some larger wavelength tunability or a more sophisticated laser modulator PIC building block according to the specific application, for example, of higher bit-rate and lower chirp transmitter. Each laser source 220 is configured to transmit a respective optical channel - at a specific central wavelength -which is input into a respective resonator 211 coupled to the laser source 220.

Each resonator 211 is further coupled, at a corresponding output thereof, to a bus waveguide 212.

With such arrangement, the individual optical channel transmitted from each laser source 220 is first input into the respective resonator 211. The resonator 211 in turn couples the received individual optical channel to the bus waveguide 212.

As a consequence, an optical transmitter may be made by means of which N optical channels transmitted from N laser sources are coupled - through respective N resonators - to the bus waveguide 212. The bus waveguide 212 in turn collects all the N optical channels received from the resonators producing one multiplexed output optical signal provided at an output thereof 213.

The bus waveguide 212 is common to all of the resonators 211 as exemplified in figure 2. This means that all the resonators 211 are coupled to one and the same bus waveguide 212.

The resonators are made of photonic crystal-based micro-cavities (PhCr-MC). The use of crystal based resonators is advantageous because such resonators have relatively very small dimension, for example typically in the range of a few micrometers (as compared to dimensions typically in the range of one or a few hundreds of micrometer in the case of ring resonator based architectures). Preferably the photonic crystal micro-cavity structure is provided on a hexagonal photonic crystal lattice structure. The hexagonal structure is preferred because according to some theoretical and experimental work already known such structure provides desirable results in particular in relation to the performance of cavities and waveguides (which are important factors to take into consideration for the purpose of the present invention).

Preferably the photonic crystal structure may comprise a thin layer, of about 150 to about 300 nm, of high-index material.

Some exemplary high-index materials may be the following (values provided may be approximate): using InGaAsP with luminescence at 1.18µm which may provide 3.33 refractive index at a wavelength of 1550nm, or using InGaAsP with luminescence at 1.45µm which may provide 3.47 refractive index at 1550nm. Such values may be compared to InP refractive index of 3.17 at 1550nm. Some examples of such high-index material are semiconductor, either air-cladded or embedded in a low-index material, e.g. silica. This is advantageous in view of achieving good performances (low loss) and the use of silica instead of air may improve thermal properties.

A resonator may be made of one or more PhCr-MCs.

In some specific embodiments, each resonator is made of a pair of PhCr-MCs matched to the central wavelength of the laser source. This configuration allows for establishing a specific direction for the propagation of the optical channel, thus avoiding propagation in undesired directions.

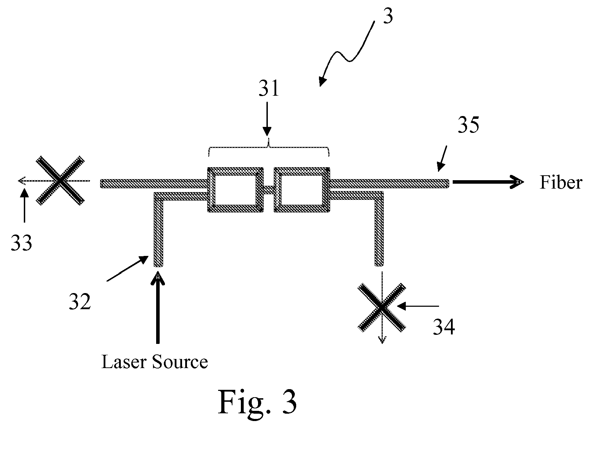

Figure 3 schematically illustrates an example of such configuration. In this figure a resonator 3 is shown comprising a pair of PhCr-MCs 31. Preferably the micro-cavities are low loss or lossless. An optical channel is input from a laser source (not shown) at input port 32. As shown in the figure output ports 33 and 34 of the two couplers 31 are blocked (or suppressed) thereby the optical channel cannot propagate in the direction of the blocked outputs 33 and 34. A further output 35 of the two couplers 31 is coupled to an output fiber thereby allowing the optical channel to propagate in the direction of the output fiber which is the desired direction of propagation of the optical channel towards the bus waveguide as described in relation to figure 2. With this specific arrangement, a desired direction of propagation is established for the optical channel.

Alternatively the resonator may have three ports. In such case only one PhCr-MC is sufficient for making the resonator. Such three-port device may have two ports coupled to the bus as input and output and a third port may be the connection to the laser.

The laser sources are preferably distributed uniformly - as much as possible - throughout the structure of the device in such a manner that some laser sources may be located on one side of the bus waveguide and other laser sources may be located on the opposite side of the bus waveguide on the structure of the optical transmitter. This arrangement for the positioning of the laser sources is advantageous because, on the one hand it allows for the heat generated by the laser sources to be as much as possible evenly distributed and therefore dissipated in a more efficient manner than if they were placed close to each other, and the other, it may allow the reduction of cross-talk between multiplexed channels which is an important problem to overcome in the field of PIC transmitters (or transceivers).

In this manner a new kind of multiplexer is obtained which replaces the use of an AWG, as is the case for some known multiplexers, with the use of much smaller size resonators. Such new structure may significantly simplify the design process of the WDM multiplexers.

The significant possibility provided by the invention in reducing the size of the final product is in part due to the fact that each cavity (or twin cavity) coupler is about the same size scale as the wavelength to be used (a few micrometers) instead of a few millimeters which is the typical size range for the AWGs (the most compact AWG known to the inventors typically has a size of a few 10µm).

The size reduction results in several other benefits such as for example a higher fabrication yield, higher tolerance to fabrication defects, better heat management, better architecture design for the whole PIC (the laser sources may be in a relatively compact configuration which may be different from the conventionally used configurations such as for example a bar configuration).

It is to be noted that the list of structures corresponding to the claimed means is not exhaustive and that one skilled in the art understands that equivalent structures can be substituted for the recited structure without departing from the scope of the invention.

It should be appreciated by those skilled in the art that any block diagrams herein represent conceptual views of illustrative circuitry embodying the principles of the invention.

## Claims

1. A multiplexer configured to multiplex N optical channels, where N is an integer number greater than zero the multiplexer comprising N resonators each resonator being based on a photonic crystal micro-cavity structure and coupled to a bus waveguide, said bus waveguide being common to the N resonators and configured to receive each of said N optical channels from an output of a respective resonator and provide said N received channels at an output.

2. The multiplexer of claim 1 wherein a photonic crystal micro-cavity structure is provided on a hexagonal photonic crystal lattice structure.

3. The multiplexer of claim 1 or claim 2 wherein the photonic crystal structure may comprise a thin layer, of about 150 to about 300 nm, of high-index material.

4. The multiplexer of any one of the preceding claims wherein each resonator is based on a pair of photonic crystal micro-cavity and configured to allow for a specific direction for the propagation of a respective optical channel.

5. A photonic integrated circuit comprising the multiplexer of any one of the preceding claims.

6. An optical transmitter comprising the multiplexer of any one of the preceding claims 1 to 5.

7. The optical transmitter of claim 6 wherein the optical transmitter further comprises N laser sources, each laser source being configured to transmit one of said N optical channels at a respective central wavelength.

8. The transmitter of claim 7 wherein each of said N laser sources is coupled to a respective one of said N resonators matched to said central wavelength of the laser source to which the resonator is coupled.

9. The transmitter of any one of claims 7 or 8 wherein some laser sources are located on one side of the bus waveguide and other laser sources are located on the opposite side of the bus waveguide on the structure of the optical transmitter.
